# EUROPÄISCHE PATENTSCHRIFT

(11) **EP 0 816 912 B1**
(45) Veröffentlichungstag und Bekanntmachung des Hinweises auf die Patenterteilung: **30.12.1998**
(21) Anmeldenummer: 97110701.6
(22) Anmeldetag: 01.07.1997
(51) Int. Cl.: G03C 1/005, G02B 5/23, C01G 5/02

(54) **Verfahren zur Herstellung einer photochromen Schicht**
Process for the production of a photochromic layer
Procédé pour la préparation d'une couche photochromique

(30) Priorität: 03.07.1996 DE 19626691
(43) Veröffentlichungstag der Anmeldung: 07.01.1998
(73) Patentinhaber: SAINT-GOBAIN VITRAGE, 92400 Courbevoie (FR)
(72) Erfinder: Weidlich, Jürgen, 06766 Wolfen (DE); Dieckmann, Udo, Dr., 06844 Dessau (DE); Otto, Volker, Dr., 06766 Wolfen (DE)
(74) Vertreter: Biermann, Wilhelm, Dr.-Ing. (Pat-Ass.)

(56) Entgegenhaltungen:
- WO-A-91/16644

## Beschreibung

Die Erfindung betrifft ein Verfahren zur Herstellung einer reversibel photochromen Schicht aus einer lichtdurchlässigen Matrix aus einem Polymer mit darin dispergierten Silberhalogenidteilchen und mit wenigstens einem in der reduzierten Form vorliegenden geeigneten Oxidationsmittel, bei dem eine die Reaktionspartner enthaltende Emulsion hergestellt und zu einer Schicht verarbeitet wird.

Verfahren dieser Art sind beispielsweise aus den Dokumenten DE 2707602 A1 und WO 91/16644 bekannt. Bei diesen bekannten Verfahren wird bei der Herstellung der photochromen Emulsion grundsätzlich so vorgegangen, daß die Silberhalogenide durch die Umsetzung von gelösten Silbersalzen mit gelösten Halogeniden hergestellt werden, und zwar in Gegenwart von polymeren Bindemitteln. Die polymeren Bindemittel müssen so ausgewählt sein, daß sie die Halogene nicht irreversibel binden. Dabei ist es auch bekannt, die Silberhalogenidkristalle mit Kupferionen zu dotieren, und zwar sowohl im Volumen als auch an der Oberfläche. Ferner ist es bekannt, zur Verbesserung des photochromen Effektes der Emulsion weitere Metallsalze zuzusetzen, beispielsweise Salze von Kobalt, Chrom, Mangan, Magnesium oder Seltenen Erden.

Während bei den bekannten photochromen Gläsern, bei denen die Silberhalogenide in der Glasmatrix dispergiert sind, offenbar jedes Silberhalogenidzentrum unabhängig von den anderen seine photochromen Eigenschaften aufweist, scheint das bei einer Polymermatrix nicht der Fall zu sein. Die bekannten photochromen Polymerschichten jedenfalls neigen dazu, im Laufe der Zeit nicht mehr vollständig reversibel zu reagieren und Streuzentren zu bilden, so daß die Schichten eine zunehmende Trübung aufweisen. Um das Verhalten solcher Schichten zu verbessern, wird in den Dokumenten DE 2707602 A1 und WO 91/16644 vorgeschlagen, die Polymermatrix mit einer bestimmten elektrischen Mindestleitfähigkeit zu versehen, indem der Emulsion beispielsweise Säuren, Ammoniumsalze oder Glycerin zugesetzt werden.

Der Erfindung liegt die Aufgabe zugrunde, ein Verfahren zur Herstellung einer photochromen Polymerschicht zu entwickeln, die als solche auch über lange Zeiträume eine minimale Trübung und eine vollständige Reversibilität der photochromen Reaktion aufweist. Die Schichten sollen ferner bei möglichst niedrigem Silberanteil unter Lichteinwirkung einen hohen Verdunklungsgrad, und im aufgehellten Zustand eine hohe Transparenz aufweisen. Außerdem sollen die Schichten die gewünschten Eigenschaften auch bei erhöhten Temperaturen voll beibehalten.

Gemäß der Erfindung wird diese Aufgabe dadurch gelöst, daß zur Herstellung der photochromen Emulsion ein elementares Silber enthaltendes Silbersol mit einer mittleren Teilchengröße des Silbers von 20 bis 250 nm mit dem Oxidationsmittel in der Größenordnung der stöchiometrischen Konzentrationsverhältnisse in Gegenwart wenigstens eines Halogenids oder Pseudohalogenids im sauren pH-Bereich umgesetzt wird.

Als Halogenidionen können Chlorid-, Bromid- und Iodidionen einzeln oder in Mischungen eingesetzt werden. Dabei sind grundsätzlich alle Kombinationen möglich. Als Pseudohalogenidionen werden vorrangig Thiozyanationen in Kombination mit Chlorid- und Bromidionen eingesetzt.

Durch das erfindungsgemäße Verfahren wird erreicht, daß bei der Einwirkung der Lichtstrahlung die maximal mögliche Silbermenge erzeugt wird, so daß die erreichbare Verdunkelung maximal ist. Als Reaktionsprodukte bei der Einwirkung der Lichtstrahlung auf die Silberhalogenidkristalle werden nur Silbercluster und die oxidierte Form des Metallsalzes gebildet. Auf diese Weise entsteht kein freies Halogen, so daß es nicht erforderlich ist, daß die Silberhalogenidkristalle mit einer halogenundurchlässigen Schicht überzogen sind, wie es beim Stand der Technik der Fall ist. Außerdem ist es bei dem erfindungsgemäßen Verfahren nicht notwendig, nur solche Bindemittel einzusetzen, die Halogene nur reversibel binden.

In zweckmäßiger Weiterbildung der Erfindung werden die Bedingungen bei der Umsetzung des Silbersols mit dem Oxidationsmittel so gewählt, daß die sich bildenden Silberhalogenide möglichst klein bleiben, um eine maximale Abdunklung und geringste Lichtstreuung zu erreichen. Vorzugsweise werden die Reaktionsbedingungen, wie Temperatur, Rührgeschwindigkeit, Dosiergeschwindigkeit usw. so gewählt, daß die sich bildenden Silberhalogenide eine mittlere Teilchengröße von etwa 300 nm nicht überschreiten.

Das Redoxpotential des Oxidationsmittels ist vorzugsweise so einzustellen, daß die Lage des Gleichgewichts bei Abwesenheit der Lichtstrahlung vollständig auf der Seite der Silberionen und der reduzierten Form des Oxidationsmittels liegt, und bei maximaler Einwirkung der Lichtstrahlung vollständig auf die Seite des Silbers und des Oxidationsmittels verlagert wird.

Die Herstellung geeigneter Silbersole kann auf verschiedene Weise nach bekannten Verfahren erfolgen. So läßt sich beispielsweise durch Gleichstromzerstäubung von Silberdraht im reinen Wasser ein Silbersol herstellen, dessen Teilchengröße von der angelegten Spannung abhängt. Aber auch durch kontinuierliche Hochfrequenzentladungen, sowie durch Elektrolyse einer 10⁻⁴n NaOH-Lösung in Gegenwart von Gummiarabikum zwischen zwei Silberelektroden sind geeignete Silbersole herstellbar. Andererseits kann auch eine Ag₂O-Suspension im Wasser durch Erhitzen in ein Silbersol überführt werden. Weitere Möglichkeiten zur Herstellung von Silbersolen bestehen in der Reduktion von löslichen Silbersalzen durch geeignete Rekutionsmittel, wie Wasserstoffgas, Hydrazinverbindungen, Phosphin, unterphosphorige Säure, Natriumdithionit, Natriumsulfit, Hydrochinon, Formaldehyd und andere Aldehyde, Formamidinsulfinsäure, Ascorbinsäure, Eisencitrat und -tartrat und alkalische Lösungen mit Dextrin, Stärke oder/und Gelatine.

Bei allen Herstellungsverfahren der Silbersole können zu ihrer Stabilisierung polymere Schutzkolloide wie Gelatine, Polyvinylpyrrolidon, Polyvinylalkohol, Gummiarabikum, Stärke, Agar-Agar etc. anwesend sein. So hergestellte Silbersole können, falls erforderlich, von den überschüssigen Anionen und Kationen durch Behandeln mit Ionenaustauschern befreit werden. Wenn die Sole gelierungsfähige Bindemittel enthalten, kann das auch durch Behandlung mit fließendem, kaltem Wasser erfolgen.

Andererseits besteht die Möglichkeit, die Sole zu flocken und die überschüssige Lösung durch Zentrifugieren oder Dekantieren abzutrennen und danach das Silbersol durch Suspendieren des Silberniederschlages in der gewünschten Lösung wieder herzustellen. Dadurch ist es nicht nur möglich, die Konzentration des Sols an Silber unabhängig vom Herstellungsprozeß einzustellen, sondern auch, falls erforderlich, ein anderes polymeres Bindemittel oder Bindemittelgemisch einzuführen.

Die Entfernung der überschüssigen und störenden Ionen und Reaktionsprodukte kann in besonders wirkungsvoller Weise durch Anwendung der Ultrafiltration erfolgen. Durch den Einsatz eines Filters mit geeigneter Molekulargewichtstrenngrenze kann dabei auch eine gezielte Abtrennung bestimmter Produkte erfolgen. Gleichzeitig besteht auch hier, wie bei dem Flock- und Sedimentationsprozeß, die Möglichkeit, die gewünschte Silberkonzentration einzustellen, ohne das gebildete Sol im ersten Schritt zu zerstören.

Als Oxidationsmittel für das Silbersol werden Schwermetallionen eingesetzt, die in verschiedenen Oxidationsstufen vorkommen, so daß die höhere Oxidationsstufe das Silber im Sol bei der Abwesenheit einer elektromagnetischen Strahlung geeigneter Wellenlänge oxidiert. Die dabei gebildete niedere Oxidationsstufe der Schwermetallionen reduziert bei der Einwirkung der Lichtstrahlung die Silberionen wieder zu Silber und wird dabei wieder in die höhere Oxidationsstufe überführt. Geeignete Schwermetalle dafür sind z. B. Eisen, Kobalt, Mangan, Chrom, Vanadium, Titan, Kupfer, Cer, Terbium, Europium und Ytterbium.

Damit für den reversiblen photochromen Prozeß das richtige Redoxpotential zwischen zwei Oxidationsstufen der Schwermetallionen erreicht wird, können die Schwermetallionen komplex gebunden sein. Geeignete Komplexbildner sind z. B. Fluorid, Chlorid, Bromid, Iodid, Cyanid, Cyanat, Thiocyanat, Selenocyanat, Derivate der Essigsäure, wie Aminoessigsäure, Nitrilotrieessigsäure und Phthalocyanin oder auch Oxogruppen.

Wenn bei den Redoxprozessen das Redoxpotential von der Wasserstoffkonzentration abhängt, kann auch der pH-Wert der polymeren Schicht auf das notwendige Maß eingestellt werden.

In zweckmäßiger Weiterbildung der Erfindung ist es auch möglich, die Oberflächenspannung, die Viskosität und die Viskoelastizität der polymeren Schicht durch Zusatz geeigneter Polymere gezielt zu verändern, um die Gießeigenschaften der Emulsion zu beeinflussen. Insbesondere eignen sich hierfür Netzmittel und wasserlösliche Polymere wie z. B. Polysaccharide und/oder Polyacrylate, die bei dem für das Red/Ox-System erforderlichen pH-Wert zur Viskositäts- und Viskoelastizitäts-Einstellung geeignet sind.

Die Polymermatrix kann beispielsweise aus Polyvinylalkohol, Polyacrylsäuren, Polymethacrylsäuren oder Mischungen solcher Polymere bestehen. Den Schichten können zur Erzielung definierter physikalisch-mechanischer Eigenschaften weitere Substanzen in den verschiedenen Stufen der Herstellung zugesetzt werden, z. B. Silane, bei deren Hydrolyse vernetzte SiO₂-Strukturen entstehen, die dann die polymeren Bindemittel in ihren Eigenschaften modifizieren.

Wenn nötig, können geeignete anionische oder kationische oder nichtionische Netzmittel zugesetzt werden, um trübungsfreie Schichten zu erhalten oder/und die Benetzung mit anderen Substanzen zu verbessern.

Um den Ablauf des ionischen Teils der photochromen Reaktion zu gewährleisten, ist eine Mindestionenbeweglichkeit in der polymeren Schicht erforderlich. Das wird dadurch erreicht, daß durch bestimmte Zusätze eine gewisse Restfeuchte in der Schicht aufrechterhalten wird. Solche Zusätze sind z. B. Glycerin, Polyethylenglykole und Mineralsäuren wie Phosphor- und Schwefelsäure, besonders deren alkylsubstituierte Derivate mit Alkylkettenlängen von 1-5 Kohlenstoffatomen.

Nachfolgend werden einige Ausführungsbeispiele für die Herstellung photochromer Schichten nach dem erfindungsgemäßen Verfahren näher beschrieben.

### Beispiel 1

Zur Herstellung eines geeigneten Silbersols wird wie folgt vorgegangen:

Es werden folgende Lösungen hergestellt:

| | |
|---|---|
| Lösung 1 | 100 g Dextrin auf |
| | 400 ml mit dest. Wasser aufgefüllt |
| Lösung 2 | 6000 ml dest. Wasser |
| Lösung 3 | 150 g NaOH auf |
| | 700 ml mit dest. Wasser aufgefüllt |
| Lösung 4 | 100 g AgNO₃ auf |
| | 160 ml mit dest. Wasser aufgefüllt |
| Lösung 5 | 30 g Na₂HPO₄ auf |
| | 200 ml mit dest. Wasser aufgefüllt |
| Lösung 6 | 3 ml NH₃ 25 % auf |
| | 1070 ml mit dest. Wasser aufgefüllt |
| Lösung 7 | 100 g Polyvinylalkohol |
| | 50 ml Natriumdioctylsulfosukzinat 3 % auf |
| | 700 ml mit dest. Wasser aufgefüllt |
| Lösung 8 | 4,4 g H₂SO₄ 98 % auf |
| | 70 ml mit dest. Wasser aufgefüllt |

Alle Feststoffe werden unter gutem Rühren aufgelöst. Die Lösung 1 wird bei 40 °C innerhalb von 2 min unter Rühren (Propellerrührer 200 U/min) in die Lösung 2 gegeben. In diese Lösung wird nach einer Pause von 10 min die Lösung 3 bei einer Rührerdrehzahl von 350 U/min mit einer Dosiergeschwindigkeit von 75 ml/min dosiert, und anschließend bei der selben Rührgeschwindigkeit mit 10 ml/min die Lösung 4. Das Reaktionsgemisch wird auf 25 °C abgekühlt und die Lösung 5 eingegossen. Danach wird noch 15 min mit 150 U/min gerührt. Das Produkt wird in einer Vollmantelzentrifuge bei 1000 U/min zentrifugiert, die überstehende Lösung verworfen und das Zentrifugat bei einer Rührerdrehzahl von 250 U/min in die Lösung 6 eingebracht. Nach einer Rührzeit von 20 min wird die Lösung 7 bei 100 U/min innerhalb von 15 min zudosiert. Es wird noch 3 min gerührt und anschließend die Lösung 8 innerhalb von 4 min dosiert. Das Reaktionsprodukt wird abschließend 30 min gerührt. Man erhält auf diese Weise ein schwarzes Silbersol mit einem Silbergehalt von 0,294 Mol/l (92 % Silberausbeute). Die Silberpartikel haben einen mittleren Durchmesser (elektronenmikroskopisch bestimmt) von 250 nm.

Zur Herstellung der das Oxidationsmittel enthaltenden Lösung werden folgende Lösungen angesetzt:

| | | |
|---|---|---|
| Lösung 1 | 60 g Gelatine | |
| | 280 ml dest. Wasser | |
| Lösung 2 | 25 ml H₂SO₄ | 5 m |
| Lösung 3 | 40 ml FeSO₄ x 7 H₂O | 1 m |
| Lösung 4 | 80 ml NaCL | 0,2 m |
| Lösung 5 | 30 ml KSCN | 0,2 m |
| Lösung 6 | 120 ml KMnO₄ | 0,2 m |

Die Gelatine wird mit dem kalten Wasser (+ 5 °C) 2 h gequollen. Danach wird auf 50 °C unter gutem Rühren (Propellerrührer 250 U/min) aufgeheitzt und nach dem Erreichen der Temperatur noch 30 min gerührt. Bei dieser Temperatur wird die Lösung 2 mit 1 ml/min hinzugegeben und anschließend noch 60 min mit 300 U/min gerührt. Danach wird die Lösung auf 25 °C abgekühlt und die Lösungen 3-6 in der angegebenen Reihenfolge mit 10 ml/min hinzudosiert. Zwischen jeder Dosierung ist eine Pause von 10 min. Nach dem Abschluß der Dosierung wird auf 40 °C aufgeheizt und noch 60 min gerührt.

Um aus dem Silbersol und der Oxidationsmittellösung die photochrome Schicht herzustellen, werden 14 ml der Oxidationsmittellösung in 8,5 ml gut gerührtes destilliertes Wasser von 35 °C innerhalb von 10 min gegeben. Nach weiteren 5 min Rühren werden 7,5 ml Silbersol mit einer Dosierungsgeschwindigkeit von 1 ml/min zugegeben. Anschließend wird die gebildete Emulsion noch 300 min lang gerührt. Die fertige photochrome Lösung wird sodann auf Glasplatten aufgegossen, wo sie erstarrt und getrocknet wird. Der Silberauftrag beträgt 0,7 g/m².

An der so beschichteten Glasplatte werden die Lichttransmission vor und nach der Belichtung, sowie das Streulichtverhalten gemessen. Die Messung der Transmission erfolgte als Status-A-Messung nach DIN 4512 Teil 9 am X-Rite 310 bei drei festgelegten Wellenlängen b (blau), g (grün) und r (rot). Die Belichtung der Probe erfolgte im Suntest CPS mit 700 Watt Tageslichtverteilung. Die Messungen wurden vor der Belichtung der Probe, nach einer Belichtungszeit von 20 min und nach einem Zeitraum von 20 min nach dem Belichten jeweils bei Raumtemperatur ausgeführt.

Das Streulichtverhalten wurde vor dem Belichten mit einem Hazemeter (haze-gard plus) nach AST M D 1003 und 1044 ermittelt, ebenfalls bei Raumtemperatur.

Die Messungen ergaben folgende Werte:

| Trübung: 2,2 % | | | |
|---|---|---|---|
| Transmission (%) | b | g | r |
| vor dem Belichten | 83,4 | 84,0 | 84,2 |
| unmittelbar nach dem Belichten | 7,8 | 6,3 | 14,8 |
| 20 min nach dem Belichten | 47,9 | 51,3 | 59,9 |

Nach 2000 Zyklen Verdunkeln-Aufhellen wurden die Messungen wiederholt. Die Meßwerte waren im wesentlichen unverändert.

### Beispiel 2

Es wird ein Silbersol aus folgenden Lösungen hergestellt:

| | |
|---|---|
| Lösung 1 | 150 g Dextrin auf |
| | 500 ml mit dest. Wasser aufgefüllt |
| Lösung 2 | 80 g NaOH auf |
| | 500 ml mit dest. Wasser aufgefüllt |
| Lösung 3 | 45 g Gelatine auf |
| | 500 ml mit dest. Wasser aufgefüllt |
| Lösung 4 | 100 g AgNO₃ auf |
| | 1500 ml mit dest. Wasser aufgefüllt |
| Lösung 5 | 96 ml Essigsäure 50 % |

Unter Rühren mit einem Propellerrührer mit 250 U/min wird Lösung 2 mit 35 ml/min bei einer Temperatur von 45 °C in die Lösung 1 dosiert. Nach dem Dosierende wird noch 10 min weitergerührt. Anschließend wird bei der gleichen Drehzahl Lösung 3 innerhalb von 1 min Zugesetzt und 30 min gerührt, Danach wird die Temperatur auf 35 °C herabgesetzt und unter intensiverem Rühren (350 U/min) Lösung 4 mit 15 ml/min dosiert. Nach dem Dosierende wird 20 min weitergerührt und Lösung 5 innerhalb von 2 min zugegeben. Nach einer weiteren Rührzeit von 60 min bei einer Drehzahl von 200 U/min wird das Produkt durch Ultrafiltration mittels eines Filters mit einer minimalen Molekulargewichtstrenngrenze von 100000 von überschüssigen Salzen und Reaktionsprodukten gereinigt. Die Konzentration an Silber wird im Sol konstant gehalten, indem das Filtrat jeweils kontinuierlich durch destilliertes Wasser ersetzt wird, bis die Leitfähigkeit des Silbersols den Wert von 1000 *µ*s (gemessen bei 40 °C) erreicht hat. Es wird ein gelbes Silbersol erhalten. Der Silbergehalt beträgt bei einer Ausbeute von 90 % 0,171 Mol/l. Elektronenmikroskopisch wurde der mittlere Durchmesser der Silberpartikel mit 20 nm bestimmt.

Als Oxidationsmittellösung wird wiederum die in Beispiel 1 beschriebene Lösung verwendet.

Zur Herstellung der photochromen Schicht aus dem Silbersol und der Oxidationsmittellösung werden 14 ml der Oxidationsmittellösung in 3,0 ml destilliertes gut gerührtes Wasser von 35 °C innerhalb von 10 min gegeben. Nach weiteren 5 min Rühren werden 13,1 ml des Silbersols mit einer Dosiergeschwindigkeit von 1 ml/min zugegeben. Die weitere Behandlung der Lösung und die Herstellung der photochromen Schicht erfolgen wie im Beispiel beschrieben.

Die an den Proben durchgeführten Tests entsprechen ebenfalls den im Beispiel 1 beschriebenen Tests. Sie führen zu folgenden Meßergebnissen:

| Trübung: 1,43% | | | |
|---|---|---|---|
| Transmission (%) | b | g | r |
| vor dem Belichten | 87,4 | 87,6 | 87,5 |
| unmittelbar nach dem Belichten | 7,2 | 8,7 | 15,2 |
| 20 min nach dem Belichten | 74,1 | 77,3 | 79,4 |

Die Wiederholung der Messungen nach 2000 Zyklen Verdunkeln-Aufhellen ergab keine wesentliche Veränderung der Meßergebnisse.

### Beispiel 3

Es wird ein Silbersol aus folgenden Lösungen hergestellt:

| | |
|---|---|
| Lösung 1 | 100 g Polyvinylpyrrolidon K 25 |
| | 36 ml Natriumdioctylsulfosukzinat 3 % auf |
| | 700 ml mit dest. Wasser aufgefüllt |
| Lösung 2 | 10 g Gelatine auf |
| | 100 ml mit dest. Wasser aufgefüllt |
| Lösung 3 | 100 g AgNO₃ auf |
| | 300 ml mit dest. Wasser aufgefüllt |
| Lösung 4 | 8 g Na₂SO₃ |
| | 4,7 g Hydrochinon auf |
| | 50 ml mit dest. Wasser aufgefüllt |

Unter gutem Rühren mit einem Propellerrührer mit 200 U/min wird bei 40 °C die Lösung 2 mit einer Geschwindigkeit von 20 ml/min in die Lösung 1 dosiert und nach einer weiteren Rührzeit von 10 min werden 80 % der Lösung 3 innerhalb von 1 min zugegeben. Die Temperatur wird auf 30 °C abgesenkt und nach einer Rührzeit von 30 min bei einer Drehzahl von 300 U/min Lösung 4 mit einer Geschwindigkeit von 5 ml/min dosiert. Zum Abschluß der Reaktion wird noch 120 min gerührt. Es wird ein orangerotes Silbersol erhalten. Die Silberausbeute beträgt 99 %. Der mittlere Durchmesser der Silberpartikel wurde elektronenmikroskopisch mit 32 nm bestimmt.

Zur Herstellung des Oxidationsmittels werden folgende Lösungen angesetzt:

| | | |
|---|---|---|
| Lösung 1 | 30 g Gelatine | |
| | 126 ml dest. Wasser | |
| Lösung 2 | 6 ml H₃PO₄ | 2 m |
| Lösung 3 | 120 ml CuCl₂ | 0,1 m |
| Lösung 4 | 60 ml Hcl | 0,5 m |

Die Gelatine wird mit kaltem Wasser (+ 5 °C) 2 h gequollen. Danach wird auf 65 °C mit einer Aufheizgeschwindigkeit von 1°/min erwärmt und 45 min bei dieser Temperatur gerührt (Propellerrührer 250 U/min). Danach wird die Lösung 2 mit 0,1 ml/min zugegeben und nach dem Dosierende noch 120 min gerührt. Anschließend wird innerhalb von 25 min auf 40 °c abgekühlt und Lösung 3 mit 5 ml/min und nach einer Pause von 10 min Lösung 4 mit 0,6 ml/min dosiert. Zum Abschluß wird das Oxidationsmittel noch 150 min gerührt.

Zur Herstellung der photochromen Schicht aus dem Silbersol und der Oxidationsmittellösung werden in 12,1 ml gut gerührtes destilliertes Wasser von 35 °C 17,1 ml der Oxidationsmittellösung innerhalb von 10 min gegeben. Nach weiteren 5 min Rühren werden 0,9 ml des Silbersols mit einer Dosiergeschwindigkeit von 1 ml/min zugegeben. Die weitere Behandlung der Lösung und die Herstellung der photochromen Schicht erfolgen auf dieselbe Weise wie beim Beispiel 1.

An den so hergestellten Proben wurden die gleichen Messungen durchgeführt, wie sie in Beispiel 1 beschrieben wurden. Die Messungen führten zu folgenden Ergebnissen:

| Trübung: 1,42 % | | | |
|---|---|---|---|
| Transmission (%) | b | g | r |
| vor dem Belichten | 88,0 | 89,4 | 89,6 |
| unmittelbar nach dem Belichten | 3,6 | 4,3 | 17,0 |
| 20 min nach dem Belichten | 72,4 | 72,1 | 74,1 |

Die Wiederholung der Messungen nach 2000 Zyklen Verdunkeln-Aufhellen ergab keine wesentliche Veränderung der Meßwerte.

## Patentansprüche

1. Verfahren zur Herstellung einer reversibel photochromen Schicht aus einer lichtdurchlässigen Matrix aus einem Polymer mit darin dispergierten Silberhalogenidteilchen und mit wenigstens einem in der reduzierten Form vorliegenden geeigneten Oxidationsmittel, bei dem eine die Reaktionspartner enthaltende Emulsion hergestellt und zu einer Schicht verarbeitet wird, **dadurch gekennzeichnet**, daß zur Herstellung der photochromen Emulsion ein elementares Silber enthaltendes Silbersol mit einer mittleren Teilchengröße des Silbers von 20 bis 250 nm mit dem Oxidationsmittel in der Größenordnung der stöchiometrischen Konzentrationsverhältnisse in Gegenwart wenigstens eines Halogenids oder Pseudohalogenids umgesetzt wird.

2. Verfahren nach Anspruch 1, dadurch gekennzeichnet, daß das Silbersol durch Reduktion von löslichen Silbersalzen mit geeigneten Reduktionsmitteln wie Wasserstoff, Hydrazinverbindungen, Phosphin, unterphosphorige Säure, Natriumdithionit, Natriumsulfit, Hydrochinon, Formaldehyd, Formamidinsulfinsäure, Ascorbinsäure, Eisencitrat, Eisentartrat und alkalischen Lösungen mit Dextrin, Stärke und/oder Gelatine hergestellt wird.

3. Verfahren nach Anspruch 2, dadurch gekennzeichnet, daß aus den hergestellten Silbersolen die überschüssigen Reaktionsprodukte entfernt werden.

4. Verfahren nach Anspruch 3, dadurch gekennzeichnet, daß aus rein wässrigen Solen die überschüssigen Anionen und Kationen durch Behandeln mit Ionenaustauschern entfernt werden.

5. Verfahren nach Anspruch 3, dadurch gekennzeichnet, daß das Sol geflockt und die überschüssige Lösung durch Zentrifugieren oder Dekantieren abgetrennt wird und anschließend durch Suspensieren des Silberniederschlags das Silbersol wieder hergestellt wird.

6. Verfahren nach Anspruch 3, dadurch gekennzeichnet, daß die Entfernung der überschüssigen und störenden Ionen und Reaktionsprodukte durch Anwendung der Ultrafiltration erfolgt.

7. Verfahren nach einem der Ansprüche 1 bis 6, dadurch gekennzeichnet, daß bei der Herstellung des Silbersols zu dessen Stabilisierung polymere Schutzkolloide wie Gelatine, Polyvinylpyrrolidon, Polyvinylalkohol, Gummiarabicum, Stärke, Agar-Agar oder dergleichen zugesetzt werden.

8. Verfahren nach einem der Ansprüche 1 bis 7, dadurch gekennzeichnet, daß die Umsetzung des Silbersols mit dem Oxidationsmittel in jeweiligen Konzentrationen durchgeführt wird, die in der Größenordnung der stöchiometrischen Konzentrationsverhältnisse liegen.

9. Verfahren nach einem der Ansprüche 1 bis 8, dadurch gekennzeichnet, daß die Reaktionsbedingungen bei der Umsetzung des Silbersols mit der oxidierten Form des Reduktionsmittels, insbesondere die Temperatur, die Rührgeschwindigkeit und die Dosierungsgeschwindigkeit, so gewählt werden, daß die sich bildenden Silberhalogenide eine mittlere Teilchengröße von kleiner als 300 nm aufweisen.

10. Verfahren nach einem der Ansprüche 1 bis 9, dadurch gekennzeichnet, daß als Oxidationsmittel Schwermetallionen eingesetzt werden, die unterschiedliche Oxidationsstufen bilden, wie Ionen von Eisen, Kobalt, Mangan, Chrom, Vanadium, Titan, Kupfer, Cer, Terbium, Europium und Ytterbium.

11. Verfahren nach Anspruch 10, dadurch gekennzeichnet, daß Schwermetallionen eingesetzt werden, die zur Einstellung des richtigen Redoxpotentials komplex gebunden sind.

12. Verfahren nach Anspruch 11, dadurch gekennzeichnet, daß komplex gebundene Schwermetallionen eingesetzt werden, bei denen als Komplexbildner Halogenide, Pseudohalogenide, Aminoessigsäure, Nitrilotriessigsäue, Ethylendiaminotetraessigsäure, Zitronensäure, Salizylsäure, Phenantrolin, Porphyrin, Phthalozyanin oder Oxogruppen dienen.

13. Verfahren nach einem der Ansprüche 1 bis 12, dadurch gekennzeichnet, daß das Redoxpotential der photochromen Emulsion mit Hilfe der Wasserstoffionenkonzentration eingestellt wird.

14. Verfahren nach einem der Ansprüche 1 bis 13, dadurch gekennzeichnet, daß als Polymere für die lichtdurchlässige Matrix Gelatine, Polyvinylalkohol, Polyvinylpyrrolidon, Polyacrylsäure, Polymethacrylsäure, Polyalkylamin, Zelluloseacetat, Agar-Agar, Gummiarabicum und deren Mischungen verwendet werden.

15. Verfahren nach einem der Ansprüche 1 bis 14, dadurch gekennzeichnet, daß der photochromen Emulsion zur Einstellung der Oberflächenspannung, der Viskosität und/oder der Viskoelastizität geeignete Begießhilfsmittel zugesetzt werden.

16. Verfahren nach Anspruch 15, dadurch gekennzeichnet, daß als Begießhilfsmittel Netzmittel und/oder wasserlösliche Polymere wie Polysaccharide und Polyacrylate zugesetzt werden.

## Claims

1. Method for the production of a reversibly photochromic layer of a translucent matrix of a polymer with silver halide particles dispersed therein and with at least one suitable oxidising agent which is present in reduced form and with which an emulsion containing the reaction partners is produced and processed into a layer, characterised thereby, that for the production of the photochromic emulsion, a silver sol containing elementary silver with a mean particle size of the silver of from 20 to 250 nanometres is converted by the oxidising agent in the order of magnitude of the stoichiometric concentration ratio in the presence of at least one halide or pseudohalide.

2. Method according to claim 1, characterised thereby, that the silver sol is produced by reduction of soluble silver salts by suitable reduction agents such as hydrogen, hydrazine compounds, phosphine, hypophosphorous acid, sodium dithionite, sodium sulphite, hydroquinone, fomaldehyde, formamidine sulphinic acid, ascorbic acid, iron citrate, iron tartrate and alkaline solutions with dextrine, starch and/or gelatine.

3. Method according to claim 2, characterised thereby, that the excess reaction products are removed from the produced silver sols.

4. Method according to claim 3, characterised thereby, that the excess anions and cations are removed from purely aqueous sols by treatment with ion exchangers.

5. Method according to claim 3, characterised thereby, that the sol is flocculated and the excess solution is separated by centrifuging or decanting and the silver sol is subsequently produced again by suspending the silver precipitation.

6. Method according to claim 3, characterised thereby, that the removal of the excess and disturbing ions and reaction products takes place by use of ultrafiltration.

7. Method according to one of the claims 1 to 6, characterised thereby, that during the production of the silver sol and for its stabilisation, polymeric protective colloids, such as gelatine, polyvinylpyrrolodine, polyvinyl alcohol, gum arabic, starch, agar-agar or the like, are added.

8. Method according to one of the claims 1 to 7, characterised thereby, that the conversion of the silver sol by the oxidising agent is performed in respective concentrations which lie in the order of magnitude of the stoichiometric concentration ratio.

9. Method according to one of the claims 1 to 8, characterised thereby, that the reaction conditions during the conversion of the silver sol by the oxidised form of the reducing agent, in particular the temperature, the speed of stirring and the speed of metering, are so chosen that the forming silver halides display a mean particle size of less than 300 nanometres.

10. Method according to one of the claims 1 to 9, characterised thereby, that heavy metal ions, which form different oxidation stages, such as ions of iron, cobalt, manganese, chromium, vanadium, titanium, copper, cerium, terbium, europium and ytterbium, are used as oxidising agents.

11. Method according to claim 10, characterised thereby, that heavy metal ions are used, which are complexed for the setting of the correct redox potential.

12. Method according to claim 11, characterised thereby, that complexed heavy metal ions are used, for which halides, pseudohalides, aminoacetic acid, nitrilo-triacetic acid, ethylenic diamine-tetracetic acid, salicylic acid, phenantroline, porphyrin, phthalocyanine or oxo groups serve as complexing agents.

13. Method according to one of the claims 1 to 12, characterised thereby, that the redox potential of the photochromic emulsion is set with the aid of the hydrogen ion concentration.

14. Method according to one of the claims 1 to 13, characterised thereby, that gelatine, polyvinyl alcohol, polyvinylpyrrolidone, polyacrylic acid, polymethacrylic acid, polyalkylamine, cellulose acetate, agar-agar, gum arabic and their mixtures are used as polymers for the translucent matrix.

15. Method according to one of the claims 1 to 14, characterised thereby, that suitable wetting aids are added to the photochromic emulsion for setting the surface tension, the viscosity and/or the visco-elasticity.

16. Method according to one of the claims 1 to 15, characterised thereby, that wetting agents and/or water-soluble polymers such as polysaccharides and polyacrylates are added as wetting aids.

## Revendications

1. Procédé de préparation d'une couche photochrome réversible à partir d'une matrice transparente faite d'un polymère dans lequel sont dispersées des particules d'halogénure d'argent et comprenant au moins un agent d'oxydation approprié présent sous forme réduite, dans lequel une émulsion, qui contient les partenaires de la réaction, est préparée et est mise sous forme d'une couche, caractérisé en ce que, pour la préparation de l'émulsion photochrome, un sol à base d'argent, contenant de l'argent élémentaire, avec une taille particulaire moyenne de l'argent comprise entre 20 et 250 nm, est mis à réagir avec l'agent d'oxydation, suivant l'ordre de grandeur du rapport stoechiométrique des concentrations, en présence d'au moins un halogénure ou pseudohalogénure.

2. Procédé suivant la revendication 1,
caractérisé en ce que le sol à base d'argent est préparé par réduction de sels d'argent solubles avec des agents de réduction appropriés tels que l'hydrogène, les composés d'hydrazine, la phosphine, l'acide hypophosphoreux, le dithionite de sodium, le sulfite de sodium, l'hydroquinone, le formaldéhyde, l'acide formamidinosulfinique, l'acide ascorbique, le citrate de fer, le tartrate de fer et les solutions alcalines de dextrine, d'amidon et/ou de gelatine.

3. Procédé suivant la revendication 2,
caractérisé en ce que les produits de réaction en excès sont éliminés des sols à base d'argent qui sont préparés.

4. Procédé suivant la revendication 3,
caractérisé en ce que les anions et les cations en excès sont éloignés des sols aqueux purs par traitement avec des échangeurs d'ions.

5. Procédé suivant la revendication 3,
caractérisé en ce que le sol est floculé et en ce que la solution en excès est séparée par centrifugation ou par décantation, et après quoi le sol à base d'argent est à nouveau préparé par mise en suspension du précipité à base d'argent.

6. Procédé suivant la revendication 3,
caractérisé en ce que l'élimination des ions et des produits de réaction en excès et gênants s'effectue par application de l'ultrafiltration.

7. Procédé suivant l'une quelconque des revendications de 1 à 6, caractérisé en ce que, lors de la préparation du sol à base d'argent, on ajoute à celui-ci des colloïdes protecteurs polymères pour le stabiliser comme la gelatine, la polyvinylpyrrolidone, le poly(alcool vinylique), la gomme arabique, l'amidon, l'agar-agar ou autres.

8. Procédé suivant l'une quelconque des revendications de 1 à 7, caractérisé en ce que la réaction du sol à base d'argent avec l'agent d'oxydation est réalisée en des concentrations respectives qui se situent dans l'ordre de grandeur du rapport stoéchiométrique des concentrations.

9. Procédé suivant l'une quelconque des revendications de 1 à 8, caractérisé en ce que les conditions réactionnelles lors de la réaction du sol à base d'argent avec la forme oxydée de l'agent de réduction, en particulier la température, la vitesse d'agitation et la vitesse d'addition, sont choisies de telle sorte que les halogénures d'argent qui se forment présentent une taille particulaire moyenne inférieure à 300 nm.

10. Procédé suivant l'une quelconque des revendications de 1 à 9, caractérisé en ce que les agents d'oxydation utilisés sont des ions de métaux lourds, présentant des degrés d'oxydation différents, comme les ions du fer, du cobalt, du manganèse, du chrome, du vanadium, du titane, du cuivre, du cérium, du terbium, de l'europium et de l'ytterbium.

11. Procédé suivant la revendication 10,
caractérisé en ce que l'on utilise des ions de métaux lourds complexés pour ajuster le potentiel redox de manière correcte.

12. Procédé suivant la revendication 11,
caractérisé en ce que l'on utilise des ions de métaux lourds complexés, dans lesquels des halogénures, des pseudohalogénures, l'acide aminoacétique, l'acide nitrilotriacétique, l'acide éthylènediaminetétraacétique, l'acide citrique, l'acide salicylique, la phénantroline, la porphyrine, la phtalocyanine ou des radicaux oxo servent d'agent complexant.

13. Procédé suivant l'une quelconque des revendications 1 à 12, caractérisé en ce que le potentiel redox de l'émulsion photochrome est ajusté à l'aide de la concentration en ion hydrogène.

14. Procédé suivant l'une quelconque des revendications 1 à 13, caractérisé en ce qu'on utilise de la gelatine, du poly(alcool vinylique), de la polyvinylpyrrolidone, du poly(acide acrylique), du poly(acide méthacrylique), de la polyalcoylamine, de l'acétate de cellulose, de l'agar-agar, de la gomme arabique et leurs mélanges comme polymère pour la matrice transparente.

15. Procédé suivant l'une quelconque des revendications 1 à 14, caractérisé en ce qu'on ajoute des auxiliaires d'étalement appropriés à l'émulsion photochrome pour ajuster la tension superficielle, la viscosité et/ou la viscoélasticité.

16. Procédé suivant la revendication 15, caractérisé en ce qu'on ajoute comme auxiliaire d'étalement un agent mouillant et/ou des polymères solubles dans l'eau comme des polysaccharides et des polyacrylates.
